# EUROPEAN PATENT APPLICATION

(11) **EP 4 826 510 A1**
(43) Date of publication of application: **21.10.2026**
(21) Application number: 25170765.9
(22) Date of filing: 15.04.2025
(51) Int. Cl.: G06F 3/12, H04N 1/00

(54) **USER INTERFACE FOR A PRINTING SYSTEM**

(71) Applicant: Canon Production Printing Holding B.V., 5914 HH Venlo (NL)
(72) Inventor: CIUPA, Mihain C., Venlo (NL); HAGENS, Pascal A.M.S., Venlo (NL)
(74) Representative: Canon Production Printing IP Department

(57) **Abstract**

User interface for displaying printing process information of at least one printing system for a user, wherein the user interface comprising a graphical element for displaying context aware information, wherein the context aware information is generated by an artificial intelligent agent based on information of the printing system.

## Description

### BACKGROUND OF THE INVENTION

The invention relates to a user interface for displaying printing process information of at least one printing system.

The printing system may be for example a printing system or a copying system. Hereinafter the printing system may also be called "printer".

Hereinafter an artificial intelligent agent may also be referred to as an Al agent.

For instance, in a network system, a personal workstation of a user and the printing system are interconnected for printing digital print files that have been made in a workstation or for scanning documents at the printing system and transferring the digital scan data files from the printing system to a workstation. Digital image reproduction apparatuses can advantageously be used as printing systems and scanners. Such a digital image apparatus includes a scanner unit, a print unit, a memory, and a user interface integrated in the apparatus or remotely usable by an operator. The user interface is provided with an input capability and a display that permit a user to give operator control commands to the apparatus. Further, the printing system includes a network connection unit for coupling to a network for the purpose of communication with a digital external environment having at least a number of workstations of users, and a control unit connected to the scanner unit, printing system unit, memory and network connection unit, and, via the network connection unit, to the workstations and other printing systems in the network.

Software for a printing system needs to be developed and released also after introduction of the printing systems in the field. Release planning involves creating a plan for the deployment of the software. It includes determining the release date, identifying the necessary resources, and preparing the release documentation. Coordination is desired with various teams involved in the software release process, such as development, testing, and operations teams. An effective release plan helps streamline the deployment process and minimizes the chances of errors or disruptions. The deployment and release stage involves making the software available to the end users. This can be done through various methods, such as physical media distribution, online downloads, or cloud-based deployments. It is important to ensure a seamless transition from the development environment to the production environment, taking into account factors like scalability, security, and compatibility.

Users of printers often fail to notice or are unaware or existing or new functionality for the printer which is delivered to the customer of the printed by the manufacturer of the printer. The manufacturer needs to maintain (in all supported languages) and to extend documentation with each version. Product documentation is for example a user manual or guide that helps customers understand how a product works, troubleshoot issues, and use various features effectively. Product documentation often includes Frequently Asked Questions (FAQs), step-by-step guides, videos, and images to improve user experience.

The user would search for product documentation, online help, videos or other resources. In some cases, he can also call a service department or a sales organisation for cases not covered by the existing documentation.

### SUMMARY OF THE INVENTION

It is an object of the present invention to provide a user interface appropriate for the printing system as mentioned here-above with respect to an update of the product information of the printer.

To this end, a user interface according to claim 1 is provided. The user interface comprises a graphical element for displaying context aware information. The context aware information is generated by an artificial intelligent agent based on information of the printing system.

The graphical element may be a window comprising text and/or graphics.

Due to the graphical element the operator of the printing system is immediately aware of the most recent product information of the printing system and can take action if needed.

The artificial intelligent agent is a software system that uses artificial intelligence (AI) to pursue goals and complete tasks on behalf of users of the printing system. The Al agent shows reasoning, planning, and memory and has a level of autonomy to make decisions, learn, and adapt. The capabilities of the Al agent are made possible in large part by the multimodal capacity of generative Al and Al foundation models. Al agents can process multimodal information like text, voice, video, audio, code, and more simultaneously and can converse, reason, learn, and make decisions. They can learn over time and facilitate transactions and business processes. Al agents can work with other Al agents to coordinate and perform more complex workflows.

Such an Al agent can be deployed in various applications to solve complex tasks in various enterprise contexts from software updates and IT automation to code-generation tools and conversational assistants. An Al agent may use the advanced natural language processing techniques of large language models (LLMs) to comprehend and respond to user inputs step-by-step and determine when to call on external tools.

The context aware information takes into account or may relate to a screen size depending on an impact on amount of information, permissions of the user such as roles and licenses, a datetime, registered user activity and registered user events, and/or a use of the printing system.

In particular the datetime may relate to a beginning of a shift, an end of shift, a moment of a new deploy of printer software or a moment of a new release of printer software.

The artificial intelligent agent is configured to receive input from and to be trained on product documentation of the printing system, status information of the printing system, update and release information of software for the printing system, a logging system of the printing system for logging user events and print jobs, stored user permissions, licenses and a logging system of an application, and to synthesise the context aware information. The Al agent may also receive input from user tacking inside an application (app), not just user events on a printer. User tacking may also influence the Al agent on what information can be displayed, for example in order to suggest functionality that was never used by the user before.

The outputted context aware information may be different for each user with respect to the user's permissions and licenses.

According to the present invention concise and relevant information is displayed at the right moment for the user, without the user having to search documentation. Also there is less effort in creating and maintaining documentation for a variety of situations faced by the users.

According to an embodiment the Al agent is trained on applying a principle (5W1H) based on a collection of questions comprising "what", "who", "where", "when", "why" and "how".

The present invention also relates to a computer device comprising an artificial intelligent agent and having a user interface according to the present invention.

The present invention also relates to a printing system connected to a local or remote computer device according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The present invention will become more fully understood from the detailed description given herein-below and the accompanying drawings which are given by way of illustration only, and thus are not limitative of the present invention, and wherein:
- Fig. 1: shows schematically an example of a network comprising a printing system in which the user interface according to the present invention are schematically shown;
- Fig. 2: shows schematically an example of a user interface window comprising the graphical element according to the present invention;
- Fig. 3: shows an example of the graphical element according to the present invention; and
- Figs. 4 - 6: show situations in which the Al agent provides information according to the present invention.

### DETAILED DESCRIPTION OF PREFERRED EMBODIMENTS

A number of embodiments will now be described in conjunction with the drawings, in which same reference numerals refer to like elements.

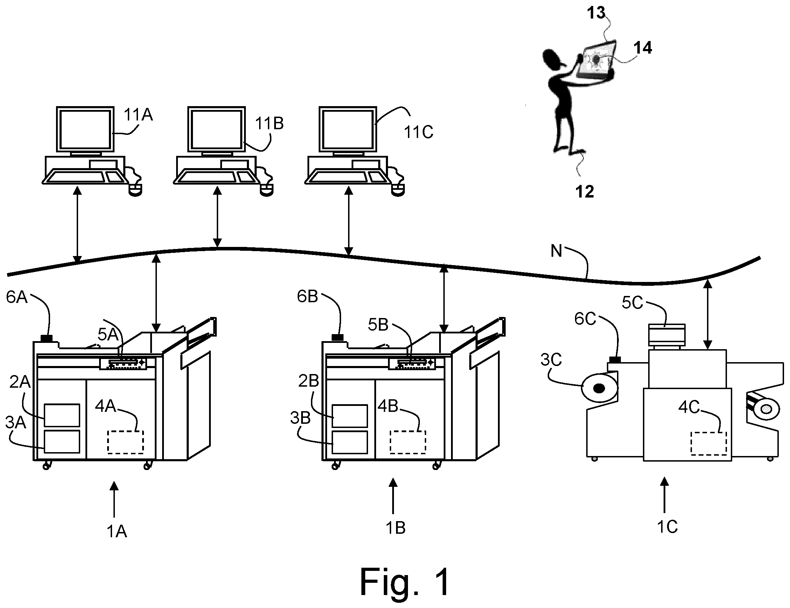

Fig. 1 shows three printers 1A, 1B, 1C which are connected to a network N.

Fig. 1 shows schematically a printing system 1A which comprises at least one input holder 2A, 3A for holding media which is intended to be used for printing of print jobs from the print job queue of the printing system 1A by means of a printing unit (not shown). The printing unit may comprise at least one print head for adhering marking material like ink or toner to the media. The media in the least one input holder 2A, 3A is transported to a print unit of the printing system 1A. The printing system 1A also comprises a local user interface 5A. While a specific printing system is shown and described, the disclosed embodiments may be used with other types of a printing system such as an inkjet printing system, an electrographic printing system, a cut sheet printing system, a roll fed printing system, etc.

The printing system 1B also comprises a local user interface 5B, and at least one input holder 2B, 3B.

Another printing system 1C is also connected to the network N. The printing system 1C comprises an input roll holder for holding an input roll 3C, a user interface 5C and a print controller 4C for controlling the printing process on the input roll 3C and maintaining a print job queue residing in the print controller 4C.

The printing systems 1A, 1B, 1C are digitally connected to a network N for bi-directional data signal transfer. The printing systems 1A, 1B, 1C comprise a print controller 4A, 4B, 4C respectively for controlling the printing process. The print controller 4A, 4B, 4C is a computer or server or a workstation, connected to the print engine of the printing system 1A, 1B, 1C respectively and connected to the digital environment of the printing system, for example the network N for transmitting a submitted print job to the printing system. In Fig. 1 the print controllers 4A, 4B, 4C are positioned inside the printing systems 1A, 1B, 1C respectively, but the print controllers may also be positioned outside the printing systems 1A, 1B, 1C in connection with the network N, for example in at least one of the workstations 11A, 11B, 11C. A print engine of the printing system 1A, 1B, 1C comprises a print head or print assembly for ejecting and/or fixing marking material to media and a paper path for transporting the media from the input holders 2A, 2B, 3A, 3B, 3C to the print head or print assembly. The print head or print assembly may be an inkjet print head, a direct imaging toner assembly or an indirect imaging toner assembly. While a media type is transported along the paper path, the media type receives the marking material from the print head or print assembly before the printed media is output in an output holder.

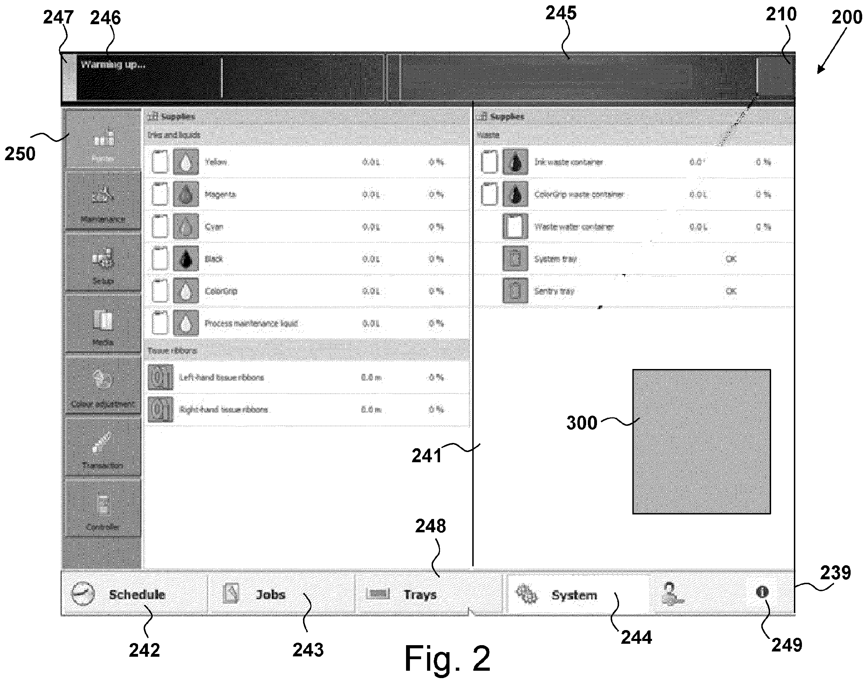

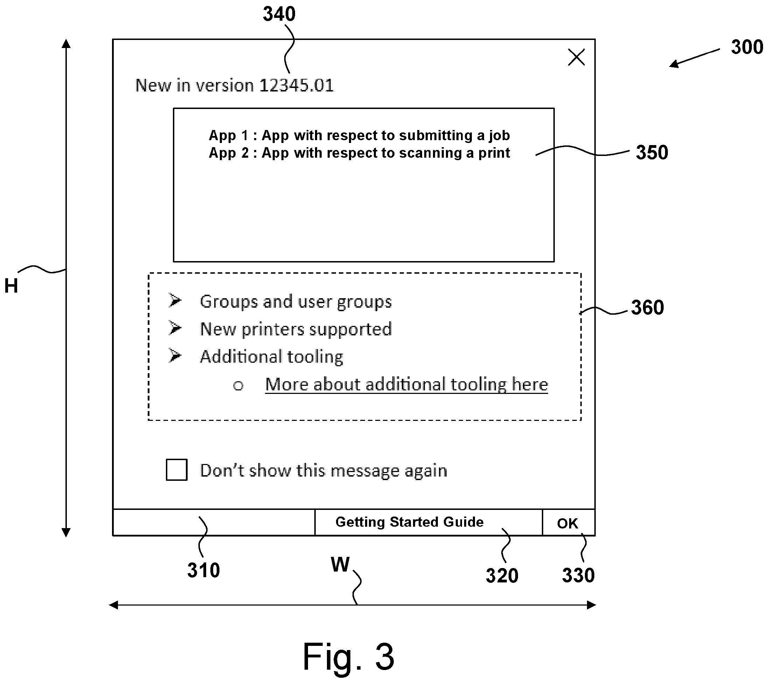

An operator 12 present in the neighbourhood of the printing systems 1A, 1B, 1C or even in another building than the printing systems 1A, 1B, 1C may use a remote wireless user interface 13 displaying printer processing information 14 of the printers 1A, 1B, 1C. The local user interfaces 5A, 5B, 5C and the remote user interface 13 are suitable for displaying user interface windows for controlling the printer, for example for controlling the job queue residing in the print controller 4A, 4B, 4C respectively and the ink levels in the printer. The local user interfaces 5A, 5B, 5C and the wireless remote user interfaces 13 are also suitable for displaying the graphical element according to the present invention, e.g. a window or sub-window of the user interface screen, which will be elucidated in Fig. 2 and Fig. 3. In another embodiment a computer in the network N has a wired (or even wireless) remote user interface for displaying and controlling the graphical element, the print job queue and ink levels of the printing systems 1A, 1B, 1C like the work stations 11A, 11B, 11C in Fig. 1.

The print controller 4A, 4B, 4C comprises a memory comprising product information, e.g. product manuals, or digital links to production information stored in one of the workstations 11A, 11B, 11C connected to the network N. The product information is needed for a proper functioning of the printing system 1A, 1B, 1C. The print controller 4A, 4B, 4C is configured to receive the context aware product information from the Al agent according to the present invention. The Al agent may be installed in the print controller or in one of the workstations 11A, 11B, 11C in the network N. The print controller is configured to apply electronic signals to the user interface 5A, 5B, 5C, 13 based on the received context aware information to show the information in a user interface window as shown in Fig. 2.

The Al agent according to the present invention may be installed on one of the workstations 11A, 11B, 11C. The Al agent may transfer data resulting from continuously analysing and monitoring the product manuals which are frequently updated and other relevant databases which are frequently updated, to the print controllers 4A, 4B, 4C. Such an update is a trigger for the Al agent that for example news regarding releases of printer software can be sent to the printers 1A, 1B. 1C.

Fig. 2 shows an example of a user interface window 200 of a user interface for the printing system 1A according to the present invention. In an alternative embodiment part of the functionality - like buttons - of this user interface window is designed as hardware buttons near the user interface window 200. The user interface window 200 may be opened at the local user interface 5A in Fig. 1 and in this example shows a representation of the supplies in the printer 1A shown in Fig. 1.

The user interface 200 comprise a top bar which is always visible on the user interface window 200. The top bar comprises a coloured icon 247 for indicating the overall state of the printer. In this example the printer is warming up as indicated by the message 246 and the coloured icon 247 is blue. The top bar comprises a message area 245 for showing messages to the operator. The top bar comprises a signalling icon 210 for indicating a special state of the printer. In this example the signalling icon 210 is not coloured and does not contain text, i.e. everything is all right for the printer 1A and printing can start.

The user interface window 200 comprises a left bar with a plurality of buttons for operator options. The left bar is always visible in the user interface window 200. In this example the button 250 labelled with "Printer" is selected.

The user interface window 200 comprises a lower bar 239 with a button 242 for access to a job schedule, a button 243 for access to a print job queue, a button 248 for access to the tray for holding media and a button 244 for access to system settings and parameters. The button 244 for access to the system settings and parameters is selected to show a panel for a state of the supplies like ink and liquids, a panel for a state of tissue ribbons, a panel for a state of waste of the supplies, and a panel for a state of the paper modules.

In the lower right corner a graphical element 300 is shown. According to the present invention the graphical element is used to show recent, concise and relevant product information gathered and synthesised by the Al agent. The graphical element may be a popup window as in Fig. 2 but may also be a so-called toggle-tip component in our design system. The toggle-tip component may be attributed to any part of a user interface and provide space for the product information. A trigger for the toggle-tip component to show up may be an activation of an information symbol 249. Since the Al agent is constantly gathering and synthesising information, the graphical element 300 may pop up at any time when there is new, concise and relevant information available.

The user interface window 200 of Fig. 2 is displayed on the user interface 5A of printer 1A, but a user interface window comprising process information and indicators may also be shown on a mobile device 13 like a tablet computer or a mobile phone in a reduced format. Users of a mobile may also receive notifications on their mobile device when relevant process information is synthesised by the Al agent. Also the user interface window 200 may be shown on the computer 11A, 11B, 11C connected to the printer 1A, 1B, 1C via the network N. The user interface window 200 may also be part of a web based application which users can access remotely in a browser application.

Fig. 3 shows an example of the graphical element according to the present invention. A header 340 describes the content of the information. A list 350 of changes applications is shown. Also some highlights 360 are presented for example an item about groups and user groups, an item about new printers supported and an item about additional tooling which is also provided with a link for further information. In a bottom bar there is some additional space 310 for special news, a button 320 to go to a web page with a "Getting Started" Guide, and an OK button 330 to close the graphical element 300 and to return to the full user interface window 200. The graphical element 300 has a certain width W and a certain height H which may relate to the importance, relevance, urgency of the product information. The width H and height H may also adapted to fit the graphical element 300 into a position in the user interface window 200 in which it does not disturb other information presented on the user interface window 200.

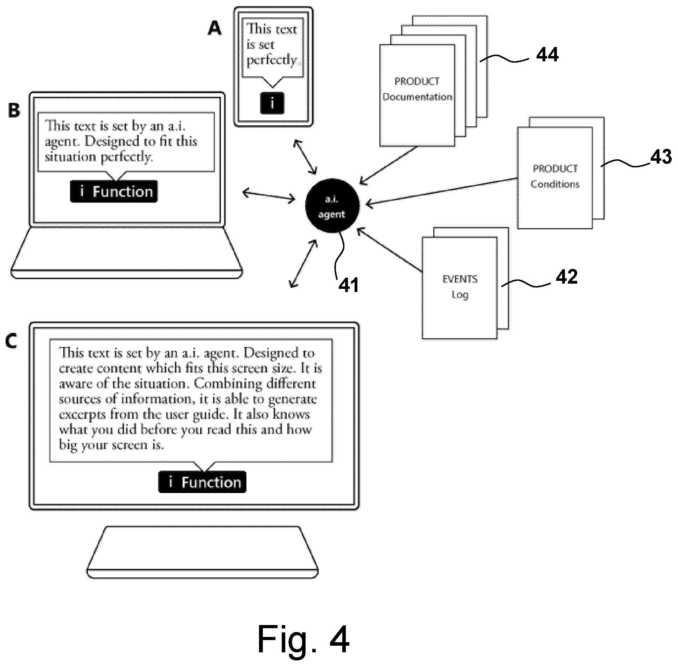

Figs. 4 - 6 show the Al agent 41 according to the present invention. The Al agent 41 may have as input a log system 42 of events, a conditions set 43 of the product, for example the printer system settings, and product documentation 44 of the printer. The Al agent 41 may provide an output according to the 5W1H principle. The 5W1H principle is a questioning approach and a problem-solving method that answers all the basic elements within a problem which are what, who, when, where, why, and how. It aims to view ideas from various perspectives and gain an in-depth understanding of a specific situation. The Al agent may receive input from answers to the 5W1H questions and deliver output based on the answers to the 5W1H questions.

The basic question "What" is for example output delivered by the Al agent of the newest release information of a product with the new features of the printer.

The basic question "Who" determines to whom the output should be provided by the Al agent. The persons to whom the output is provided may be controlled via the login in a computer system connected to the printer with a user name and password. The user may have some privileges and restriction for which information he is allowed to see, edit, change, remove, etc.

The basic question "When" is determined by the Al agent to be the most suitable moment in time that the information should be provided. In case of a new software release this could be the date of release, the date of installation or implementation, or even before those dates in a pre-release publication.

The basic question "Where" is determined by the Al agent to be the workstations at which the information is provide via the network. For example, only workstations in the neighbourhood of a specific printer may be involved in getting the information synthesised by the Al agent. In another example, only computer systems in a specific building may be involved.

The basic question "Why" is determined by the Al agent by means of certain triggers to start with publishing gathered and synthesised information. Such a trigger may be a release of software package, or a scheduled maintenance action on the printer.

The basic element "How" is determined by the Al agent to be the most convenient way to show the information. The graphical element may be sized according to the amount of information or according to the importance of the information, may be positioned in a part of the user interface window that does not overlap with other important information on the user interface window, may be designed to attract attention of the user when it pops up.

Fig. 4 shows a situation in which the basic question "Where" is relevant. The Al agent 41 may provide information on a hand held device A with a comparatively small screen, limiting the amount of information that can be shown directly. according to the present invention. The Al agent may provide information on a lap top device B with a screen size which allows for more information. The text or graphics are set by the Al agent and designed to fit the situation perfectly. The Al agent may provide information on a desktop system C with a large screen. The text or graphics is set by an Al agent and designed to create content which fits the screen size. The Al agent 41 is aware of the situation. Combining different sources of information, the Al agent 41 is for example able to generate excerpts from a user guide. The Al agent 41 also knows what you did before you read this screen by consulting the event logs 42 as an input. The Al agent 41 also knows how big the screen is by consulting the product conditions 43.

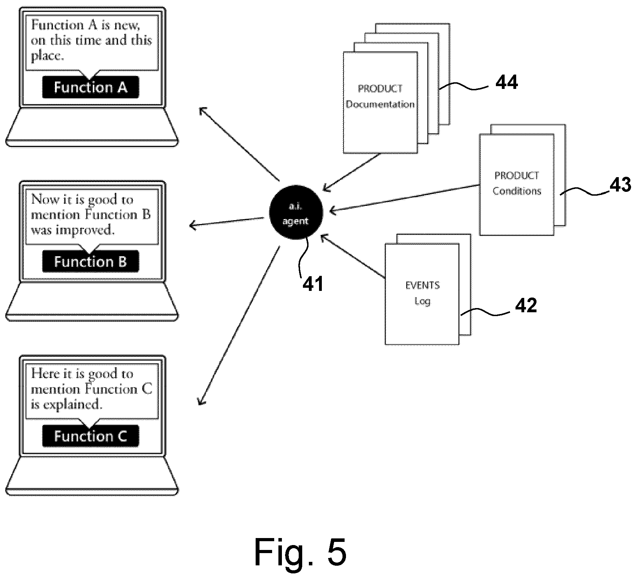

Fig. 5 shows a situation in which the basic question "What" is relevant. The Al agent 41 may provide information about a function A which is new. An operator may not be aware of the new function A. The Al agent 41 may provide information about an existing function B which is improved. After a sequence of interactions, changes of function B became relevant, so the changes are shown. The Al agent 41 may provide information about an existing function C which is explained. Given the context of the user of the product, function C may be relevant to show.

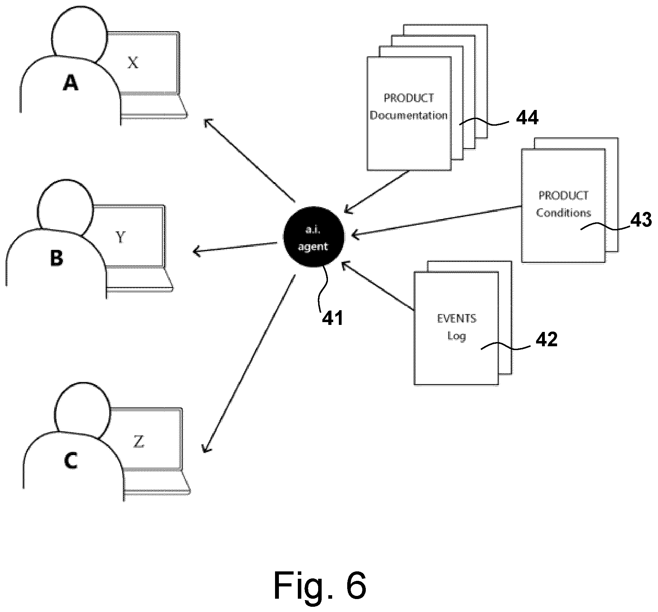

Fig. 6 shows a situation in which the basic questions "Who" and "What" are relevant. The Al agent 41 may provide specific information for an operator A who has a roll X. The Al agent 41 may provide specific information for an operator B who has a roll Y. The Al agent 41 may provide specific information for an operator C who has roll Z.

The invention being thus described, it will be obvious that the same may be varied in many ways. Such variations and modifications as would be obvious to one skilled in the art are intended to be included within the scope of the following claims.

## Claims

1. User interface for displaying printing process information of at least one printing system for a user, wherein the user interface comprising a graphical element for displaying context aware information, wherein the context aware information is generated by an artificial intelligent agent based on information of the printing system.

2. User interface according to claim 1, wherein the context aware information takes into account or relates to a screen size depending on an impact on amount of information, permissions of the user such as roles and licenses, a time of the day, registered user activity and registered user events, and a use of the printing system.

3. User interface according to claim 2, wherein the time of the day relates to a beginning of a shift, an end of shift, a moment of a new deploy of printer software or a moment of a new release of printer software.

4. User interface according to any of the preceding claims, wherein the artificial intelligent agent is configured to receive input from and to be trained on product documentation of the printing system, status information of the printing system, update and release information of software for the printing system, a logging system of the printing system for logging user events and print jobs, stored user permissions, licenses and a logging system of an application, and to synthesise the context aware information.

5. User interface according to claim 4, where the outputted context aware information is different for each user with respect to the user's permissions and licenses.

6. User interface according to any of the preceding claims, wherein the artificial intelligent agent is trained on applying a principle (5W1H) based on a collection of questions comprising "what", "who", "where", "when", "why" and "how".

7. A computer device comprising an artificial intelligent agent and having a user interface according to any of the preceding claims.

8. A printing system connected to a local or remote computer device according to claim 7.
